# EUROPÄISCHE PATENTANMELDUNG

(11) **EP 0 857 430 A2**
(43) Veröffentlichungstag der Anmeldung: **12.08.1998**
(21) Anmeldenummer: 98100295.9
(22) Anmeldetag: 09.01.1998
(51) Int. Cl.: A23P 1/08, A23L 3/37, A23L 1/39

(54) **Vorrichtung zum Überziehen von Lebensmittelprodukten mit Sosse**

(30) Priorität: 15.01.1997 DE 19701157
(71) Anmelder: Peter Heller GmbH, 32832 Augustdorf (DE)
(72) Erfinder: Heller, Peter, 32832 Augustdorf (DE)
(74) Vertreter: TER MEER STEINMEISTER & PARTNER GbR

(57) **Zusammenfassung**

Eine Vorrichtung zum Überziehen von Lebensmittelprodukten mit Soße unter gleichzeitigem Tiefgefrieren umfaßt eine liegend angeordnete, drehbare Trommel (10), auf deren innerer Wandfläche ein Mitnehmer angeordnet ist und die an einer Stirnseite eine Öffnung (16) aufweist. Die Vorrichtung umfaßt weiterhin eine zweite Öffnung (18) auf der gegenüberliegenden Stirnseite, einen an dem Mitnehmer (88) angebrachten Auswerfer vor der zweiten Öffnung (18), eine in der ersten Öffnung (16) angebrachte Düse (80,84,86) zum Einbringen eines Kühlmittels, insbesondere in der Form von flüssigem Stickstoff oder flüssigem CO₂ in die Trommel, eine weitere, in der ersten Öffnung (16) angebrachte Düse zum Einspritzen von Soße in die Trommel, ein im wesentlichen die gesamte Querschnittsfläche der ersten Öffnung (16) einnehmendes Absaugrohr zum Absaugen von gasförmigem Kühlmittel sowie eine bewegliche Halterung (42,44), die das Absaugrohr (34,28) aufnimmt und es gestattet, das Absaugrohr zwischen einer Position unmittelbar vor der ersten Öffnung und einer zurückgezogenen Position zu bewegen.

## Beschreibung

Die Erfindung betrifft eine Vorrichtung zum Überziehen von Lebensmittelprodukten mit Soße unter gleichzeitigem Tiefgefrieren, mit einer liegend angeordneten drehbaren Trommel, auf deren innerer Wandfläche ein Mitnehmer angeordnet ist, und die an einer Stirnseite eine Öffnung aufweist.

Bisher ist es nicht befriedigend möglich, verschiedene gekochte Lebensmittelprodukte, wie etwa Nudeln, Reis, Gemüse, Kartoffeln oder Fleisch, in tiefgekühltem Zustand fest mit einer Soße zu verbinden, insbesondere wenn der Soßenanteil höher als etwa 4% biegen soll. Dies wäre jedoch wünschenswert, da es die Möglichkeit bieten würde, den Inhalt einer Packung des Produkts in einzelne Portionen zu unterteilen, die stets dieselbe Konsistenz und Zusammensetzung hätten. Eine Durchmischung des gesamten Packungsinhalts vor dem Verzehr wäre daher entbehrlich. In der Praxis ist es daher üblich, daß die Hersteller das gesamte Produkt entweder als gefrorenen Block anbieten oder der Packung einige größere, gefrorene Teilstücke des Soßenanteils in Blockform beilegen.

Es ist zwar versucht worden, in liegend angeordneten, drehbaren, verhältnismäßig langen Trommeln Lebensmittelprodukte mit Hilfe von flüssigem Stickstoff oder flüssigem CO₂ gefrieren zu lassen und zugleich mit einem Soßenüberzug (Coating) zu versehen. Die Ergebnisse waren jedoch bisher unbefriedigend. Ein gleichmäßiges Anhaften der Soße konnte nur bedingt erreicht werden. Die entstandenen Probleme beruhten offenbar im wesentlichen darauf, daß die Waren nicht rasch genug heruntergekühlt werden konnten. Bei den bisher verwendeten, relativ langen Trommeln mit nur einer Einfüll- und Entnahmeöffnung an einer Stirnseite befand sich an dem Mitnehmer im Bereich der Öffnung ein Auswerfer zum Auswerfen der Waren nach dem Kühlvorgang. Daraus ergaben sich verhältnismäßig beengte Platzverhältnisse, die insbesondere dem raschen Einbringen des Kühlmittels entgegenstanden. Wenn aber die Kühlung nicht rasch genug erfolgt, wird nicht nur das Anhaften der Soße an den Produkten eingeschränkt. Vielmehr kann es auch zu einem Klumpen oder Verkleben oder zu einem Bruch der Waren, etwa von gekochtem Reis oder Nudeln, kommen.

Der Erfindung liegt die Aufgabe zugrunde, eine Vorrichtung der obigen Art zu schaffen, die es gestattet, Lebensmittelprodukte rasch mit einem genau definierbaren Temperatur-Zeit-Profil tiefzugefrieren und dabei zugleich mit einem fest anhaftenden Soßenüberzug zu versehen.

Diese Aufgabe wird erfindungsgemäß durch eine Vorrichtung der eingangs genannten Art gelöst, die gekennzeichnet ist durch eine zweite Öffnung auf der gegenüberliegenden Stirnseite, einen an dem Mitnehmer vorgesehenen Auswerfer vor der zweiten Öffnung, eine in der ersten Öffnung angebrachte Düse zum Einbringen eines Kühlmittels, insbesondere in der Form von flüssigem Stickstoff oder flüssigem CO₂, in die Trommel, eine weitere, neben der ersten Öffnung angebrachte Düse zum Einspritzen von Soße in die Trommel, ein im wesentlichen die gesamte Querschnittsfläche der ersten Öffnung einnehmendes Absaugrohr zum Absaugen von gasförmigem Kühlmittel sowie eine bewegliche Halterung, die einen Teilabschnitt des Absaugrohres aufnimmt und es gestattet, das Absaugrohr zwischen einer Position unmittelbar vor der ersten Öffnung und einer zurückgezogenen Position zu bewegen.

Da die Trommel zwei Öffnungen auf zwei gegenüberliegenden Selten hat, können die beiden Öffnungen speziell auf die Funktion des Einfüllens bzw. der Entnahme der Produkte zugeschnitten werden. Der vor der zweiten Öffnung vorgesehene Auswerfer ermöglicht die rasche Abgabe der Produkte nach der Behandlung, behindert jedoch nicht das rasche Einspritzen von Kühlmittel und Soße auf der gegenüberliegenden Seite.

Ein wesentlicher Vorteil der Erfindung liegt in der Anordnung des Absaugrohres, das im Interesse eines raschen Abzuges des gasförmigen Kühlmittels groß dimensioniert ist, auf einer beweglichen Halterung vor der ersten Öffnung. Mit dieser Halterung kann das Absaugrohr nach Beendigung eines Arbeitsgangs zur Seite bewegt werden, so daß der Arbeitsraum vor der Trommel frei ist und neues Füllgut eingefüllt werden kann. Als Halterung kommt beispielsweise ein verfahrbarer Wagen, ein Schwenkarm, eine Hubeinrichtung oder dergleichen in Betracht.

Die Düsen oder Lanzen zum Einspritzen von Kühlmittel und Soße sind erfindungsgemäß gut zugänglich an dem Absaugrohr oder einem dessen Ende umgebenden Kragen angebracht. Dies ermöglicht ein leichtes Auswechseln der Düsen und eine einfache Handhabung der Düsen. Die Lebensmittelprodukte werden durch den Mitnehmer laufend in der Trommel umgewälzt, dabei gleichförmig mit Soße (Coating) beschichtet und zugleich tiefgefroren.

Während für das Einspritzen von flüssigem Stickstoff als Kühlmittel und ebenso für das Einspritzen von Soßen weitgehend übliche Düsen verwendet werden können, wird bei Verwendung von CO₂ als Kühlmittel ein sogenanntes Schneerohr eingesetzt, in das an einem Ende das flüssige CO₂ eintritt und das am anderen Ende zur Abgabe von CO₂-Schnee in den Innenraum der Trommel offen ist.

Im folgenden werden bevorzugte Ausführungsbeispiele der Erfindung anhand der beigefügten Zeichnung näher erläutert.
- Fig. 1: ist eine schematische Darstellung einer erfindungsgemäßen Vorrichtung innerhalb eines teilweise angedeuteten Betriebsgebäudes;
- Fig. 2: zeigt eine andere Ausführungsform einer derartigen Anlage;
- Fig. 3 und 4: veranschaulichen Einzelheiten der Kühlmittelzufuhr;
- Fig. 5 und 6: sind schematische Seitenansicht und Draufsicht einer erfindungsgemäßen Trommel mit verfahrbarer Öffnung und Absaugsystem;
- Fig. 7: ist eine schematische Teildarstellung und zeigt eine Ansicht in das offene Ende des Absaugrohres;
- Fig. 8: ist eine Seitenteilansicht der Trommel und des Absaugrohres in einer teilweise geschnittenen Darstellung;
- Fig. 9: entspricht Fig. 8, zeigt jedoch eine andere Ausführungsform.

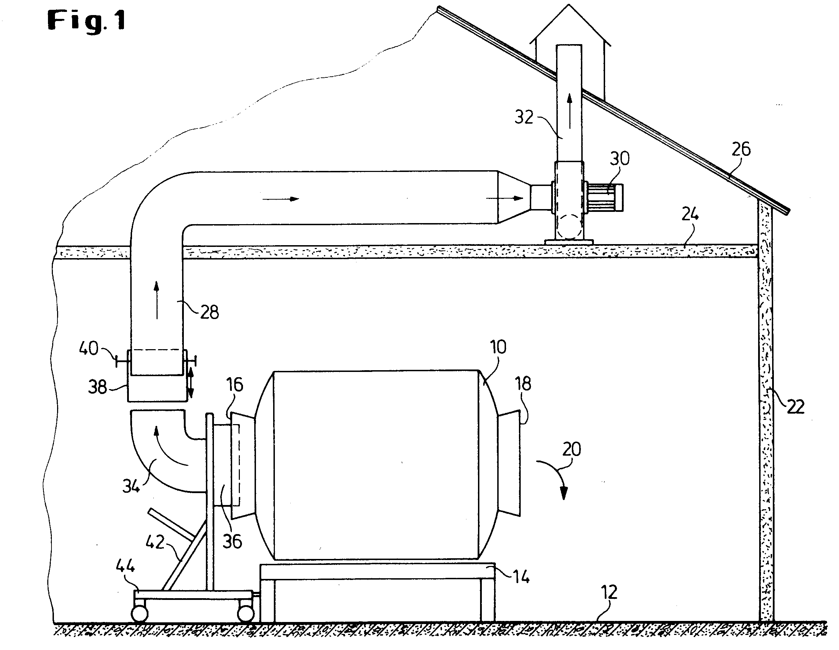

In Fig. 1 ist eine erfindungsgemäße Trommel mit 10 bezeichnet. Die Trommel steht auf dem Boden 12 eines Betriebsgebäudes und wird durch ein Gestell 14 abgestützt, das in nicht gezeigter Weise mit Stütz- und Antriebsrollen für die Trommel versehen ist, die eine Drehung der Trommel gestatten. Die Trommel 10 weist auf der linken Seite und auf der rechten Seite an beiden stirnseitigen Enden Öffnungen 16 und 18 auf, die als erste und zweite Öffnung bezeichnet werden sollen. Die zweite Öffnung bildet die Entleerungsöffnung für das fertige Produkt, wie durch den Pfeil 20 angedeutet ist.

Zur weiteren Veranschaulichung des Betriebsgebäudes ist eine Außenwand 22 gezeigt, die eine Zwischendecke 24 sowie ein Dach 26 abstützt. Die links in Fig. 1 liegende Öffnung 16 der Trommel 10 dient zum einen zum Einfüllen des Füllguts der Trommel, und im übrigen während des Arbeitsvorganges zum Absaugen von verdunstetem Kühlmittel, insbesondere Stickstoff oder Kohlendioxyd. Da eine rasche und intensive Absaugung zur Vermeidung eines Überdrucks in der Trommel notwendig ist, wird die Öffnung 16 während des Arbeitsvorganges mit einem Absaugrohr 28 mit verhältnismäßig großem Querschnitt verbunden. Dieses Absaugrohr wird bei dem dargestellten Beispiel durch die Zwischendecke 24 nach oben und sodann seitlich zu einem Gebläse 30 geführt, dessen Auslaßrohr 32 nach oben aus dem Dach 26 austritt.

Während des Absaugvorganges wird das senkrecht durch die Zwischendecke 24 nach unten verlaufende Absaugrohr 28 an seinem unteren Ende mit einem Rohrbogen 34 verbunden, dessen Ende durch einen Kragen 36 umgeben ist. Dieser Kragen 36 liegt während des Absaugbetriebes mit umlaufendem Abstand in der trichterförmig gestalteten Öffnung 16. Die Verbindung zwischen dem Absaugrohr 28 und dem Rohrbogen 34 während eines Absaugvorganges kann hergestellt werden durch eine Schiebemuffe 38 auf dem unteren Ende des Absaugrohres 28, die nach dem Lösen von Klemmschrauben 40 in bezug auf das Absaugrohr so weit abgesenkt werden kann, daß sie den nach oben gerichteten Abschnitt des Rohrbogens 34 übergreift.

Der Rohrbogen 34 zusammen mit dem Kragen 36 wird durch ein Gestell 42 abgestützt, das auf einem Wagen 44 verfahrbar ist. Nach Fertigstellung einer Charge des Füllgutes wird die Rohrmuffe 38 auf dem Absaugrohr 28 hochgeschoben und verklemmt, und anschließend kann der Wagen 44 zusammen mit dem Gestell 42, dem Rohrbogen 34 und dem Kragen 36 zur Seite gefahren werden, so daß die Öffnung 16 frei zugänglich ist und neues Füllgut eingebracht werden kann. Die Zugänglichkeit ist im übrigen auch vorteilhaft für Reinigungs-, Wartungs- und Reparaturarbeiten.

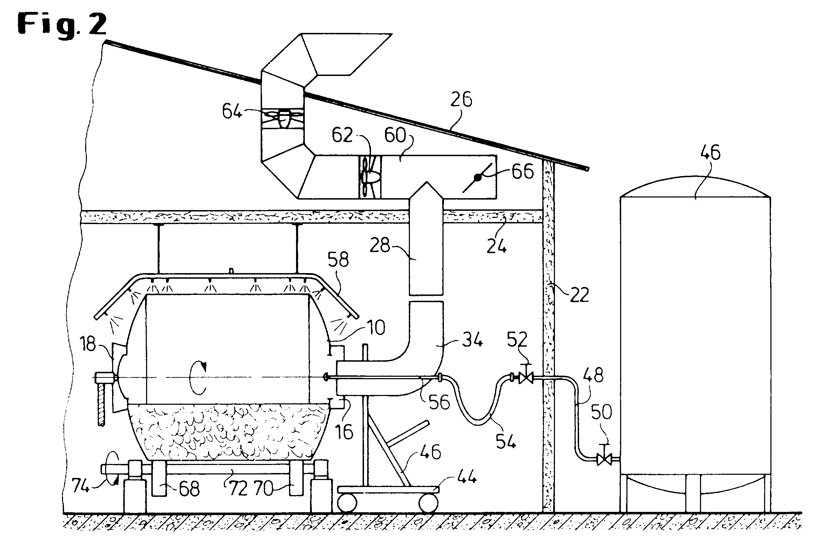

In Fig. 2 ist eine ähnliche Gesamtlösung schematisch dargestellt. Teile, die bereits in Zusammenhang mit Fig. 1 erläutert werden, tragen die selben Bezugsziffern. In Fig. 2 befindet sich die Trommel in einer gegenüber Fig. 1 umgekehrten Anordnung, mit der Entleerungs-Öffnung 18 auf der linken und der Einfüll-Öffnung 16 auf der rechten Seite. Innerhalb der Trommel 10 ist das zu behandelnde Gut zeichnerisch veranschaulicht. Außerhalb des Gebäudes steht ein zylindrischer Druckbehälter 46, der das flüssige Kühlmittel, also etwa Stickstoff oder Kolhlendioxyd enthält. Über eine Leitung 48 gelangt das Kühlmittel nach dem Öffnen von Ventilen 50 und 52 auf der Außen- und Innenseite des Gebäudes über einen Schlauchabschnitt 54 und einen Rohrabschnitt 56 in das Innere der Trommel 10.

An der Unterseite der Zwischendecke 24 ist ein Sprührohr 58 aufgehängt, mit dem von außen ein Kühlmittel auf die Trommel 10 aufgesprüht werden kann. Oberhalb der Zwischendecke 24 ist die Führung des Absaugrohres gegenüber der Ausführungsform von Fig. 1 abgewandelt. Das senkrecht durch die Zwischendecke 24 nach oben austretende Absaugrohr 28 ist T-förmig mit einem weiteren Rohrabschnitt 60 verbunden, in dem sich nacheinander zwei Gebläseräder 62 und 64 befinden, die das abzusaugende Gas aus dem Absaugrohr 28 oberhalb der Zwischendecke 24 zunächst nach links und sodann senkrecht nach oben durch das Dach 26 transportieren und schließlich nach rechts in Fig. 2 abgeben. Am rechten Ende des waagerechten Teils des Rohrabschnitts 60 befindet sich eine unterdruckgesteuerte Nebenluftklappe 66.

In Fig. 2 ist im übrigen erkennbar, daß die Trommel 10 auf Stütz- und Antriebsrollen 68,70 liegt, die sich auf einer gemeinsamen Welle 72 befinden, die entsprechend dem Pfeil 74 drehbar ist. Derartige Wellen und Rollen befinden sich auf beiden Seiten der Trommel, so daß die Trommel sicher abgestützt ist und entsprechend der Drehung der Wellen gedreht werden kann.

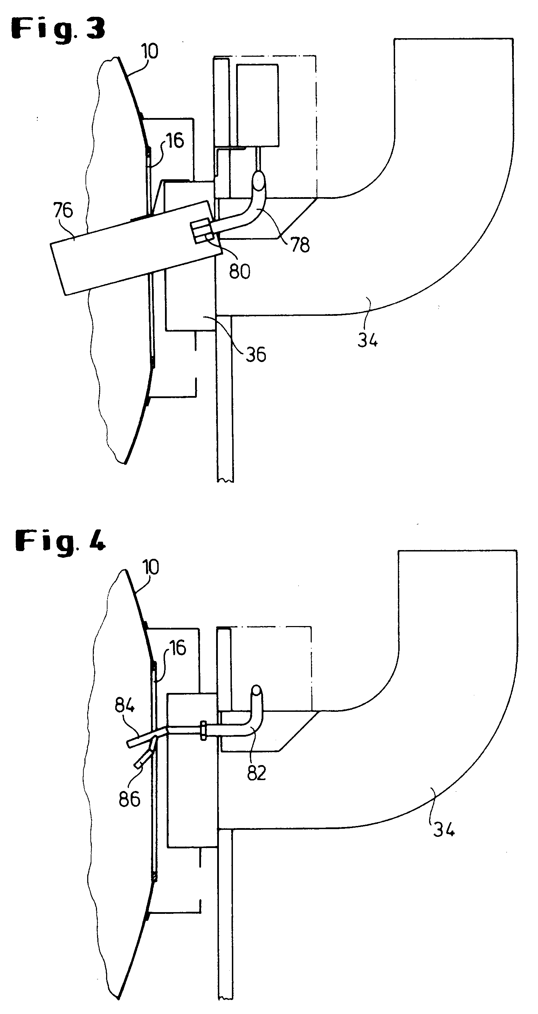

Fig. 3 und 4 zeigen zwei stark schematisierte Darstellungen des Bereichs der Einlaßöffnung 16 der Trommel 10. Fig. 3 und 4 zeigen im übrigen den Rohrbogen 34 des Absaugsystems und den Kragen 36.

Fig. 3 zeigt ein im oberen Bereich des Rohrbogens in die Trommel durch den Kragen 36 hindurch eintretendes, sogenanntes Schneerohr 76, das von rechts nach links in Fig. 3 leicht abwärts geneigt ist und am rechten Ende geschlossen ist. In dieses geschlossene Ende tritt eine Leitung 78 ein, an deren Ende sich innerhalb des Schneerohres eine Düse 80 befindet. Durch diese Düse 80 wird flüssiges Kohlendioxyd abgegeben, das innerhalb des Schneerohres unverzüglich zu CO₂-Schnee erstarrt.

Dieses Kühlmittelzufuhrsystem wird bei der Ausführungsform gemäß Fig. 4 gebildet durch eine Leitung 82, die innerhalb der Trommel 10 in zwei Düsen 84,86 übergeht, durch die flüssiger Stickstoff als Kühlmittel abgegeben wird.

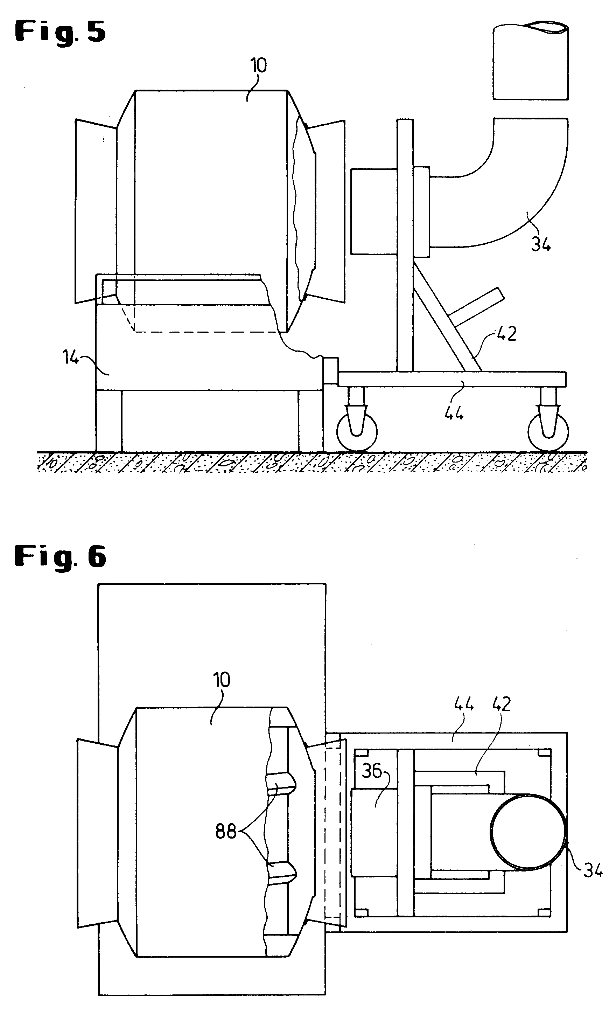

Fig. 5 und 6 dienen zur ergänzenden Erläuterung einiger bisher nicht gezeigter Einzelheiten. Zum einen zeigt Fig. 6 das Gestell 42 zusammen mit dem Wagen 44 in Draufsicht. Im übrigen ist die Trommel 10 in Fig. 6 teilweise aufgeschnitten dargestellt, so daß Mitnehmer 88 innerhalb der Trommel erkennbar werden, die auf der inneren Mantelfläche ausgebildet sind und das zu verarbeitende Gut bei der Drehung der Trommel mitnehmen.

Außer den in Fig. 3 und 4 gezeigten Zufuhreinrichtungen für ein Kühlmittel, also etwa Kohlendioxyd oder Stickstoff, befindet sich im Bereich der ersten Öffnung 16 eine Zufuhrleitung zum Einbringen einer Soße in die Trommel, die in einer Düse endet. Diese Zufuhrleitung soll später beschrieben werden.

Aus den zuvor erläuterten Zeichnungen ist zu entnehmen, daß der vordere Kragen 36 im wesentlichen nur durch einen das entsprechende Ende des Rohrbogens 14 des Absaugrohres umgebenden Ring gebildet wird, der gegenüber der Öffnungsfläche der ersten Öffnung 16 einen erheblichen, umlaufenden Spalt freiläßt. Die Vorrichtung arbeitet also als offenes System. Da im Inneren der Trommel ein Überdruck durch das starke Absaugen des verdampfenden Kühlmittels und im übrigen den Spalt auf der Einlaßseite in jedem Fall vermieden wird, können die benötigten Flüssigkeiten, also das Kühlmittel und die Soße, ungehindert eingespritzt werden.

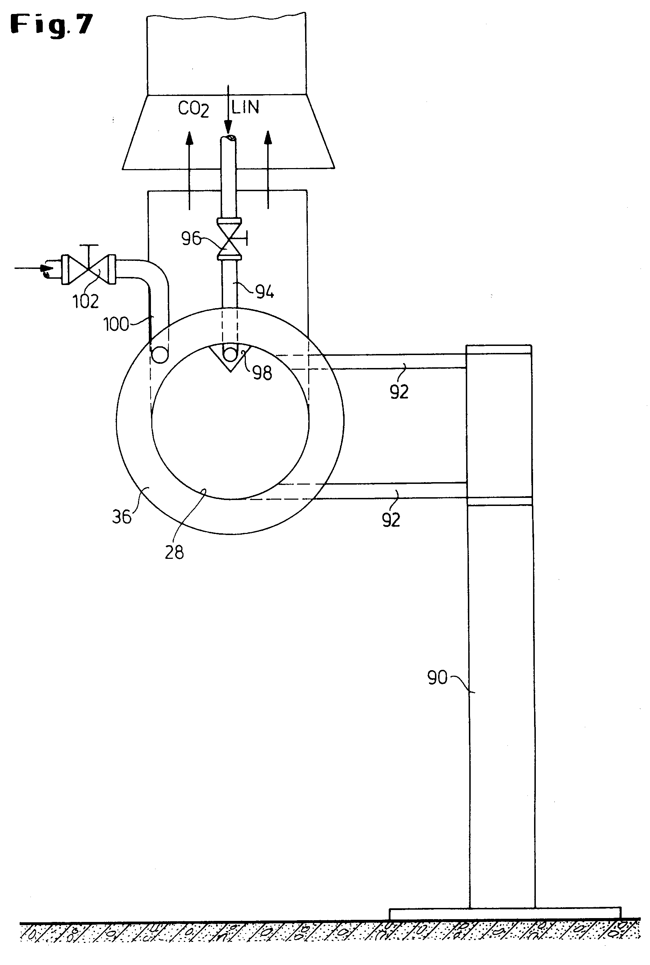

Zunächst ist gemäß Fig. 7 der Rohrbogen 34 des Absaugrohres 28 in Abweichung von den bisher beschriebenen Figuren nicht auf einem Wagen 44, sondern einem senkrechten Pfosten 90 angebracht, mit dem der Rohrbogen über waagerechte Schwenkarme 92 verbunden ist. Die Gesamtanordnung aus dem Absaugrohr bzw. Rohrbogen und den Düsen kann daher nach Beendigung eines Zyklus zur Seite geschwenkt werden. In Fig. 7 ist mit 94 eine Leitung zum Zuführen des Kühlmittels bezeichnet. In dieser Leitung befindet sich ein Ventil 96. Wie bereits in Fig. 3 und 4 angedeutet wurde, wird die Leitung 94 in einer oberen Einbuchtung 98 des Absaugrohres geführt, so daß sie unmittelbar in der Querschnittsfläche des Absaugrohres durch die Öffnung in die Trommel 10 eintrifft. Fig. 7 zeigt im übrigen eine Leitung 100 mit einem Ventil 102 für die Zufuhr von Soße. Diese Leitung 100 tritt durch den Kragen 36 in der Zehn-Uhr-Position in die Trommel ein.

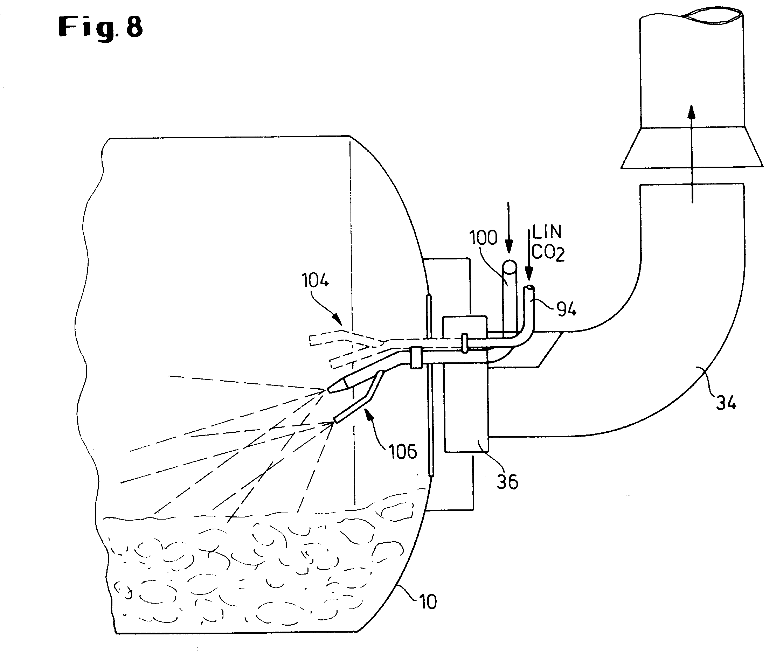

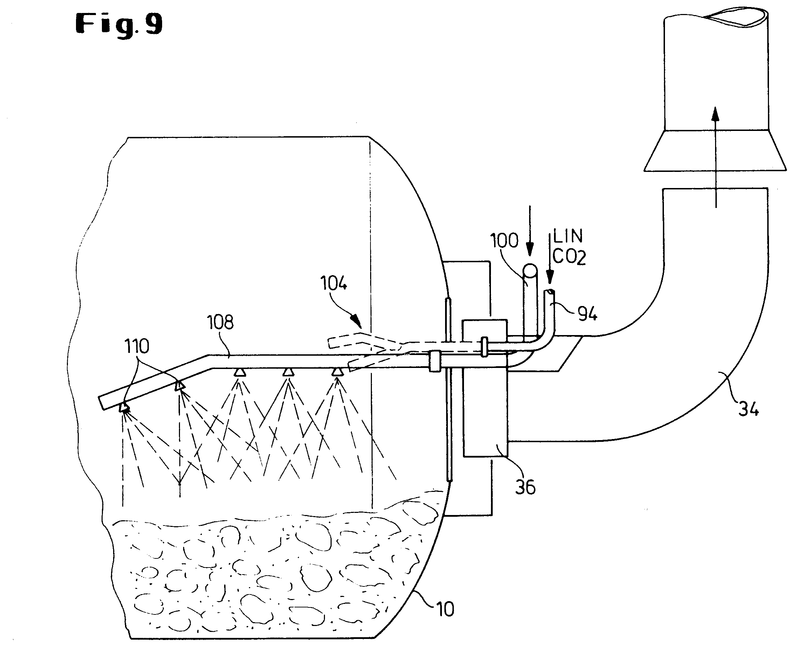

In der Seitenansicht sind die beiden Leitungen in Fig. 8 und 9 gezeigt. Die beiden Leitungen für Kühlmittel und Soße sind auch in diesen Figuren mit 94 und 100 bezeichnet. Am Ende der Leitung 94 befindet sich zum Einbringen von flüssigem Stickstoff eine sogenannte Drei-Finger-Düse 104. Eine ähnliche Drei-Finger-Düse 106 ist am Ende der Leitung 100 vorgesehen. Eine derartige Düse eignet sich zum Einbringen von dickflüssigen Soßen.

Fig. 9 unterscheidet sich inswoweit von Fig. 8, als anstelle der Drei-Finger-Düse 106 eine Lanze 108 vorgesehen ist, deren vorderer Endbereich schräg nach unten abgeknickt ist. An der Unterseite der Lanze 108 befindet sich eine Anzahl von Flachstrahldüsen 110.

Die erfindungsgemäße Vorrichtung bietet zwar auch die Möglichkeit, die zu verarbeitenden Lebensmittelprodukte lediglich einzufrieren. Der besondere Vorteil liegt aber darin, daß die Vorrichtung sowohl einen Gefriervorgang als auch einen Mischvorgang gestattet, bei dem die Produkte mit Soße überzogen werden und der Überzug in konstanter Verteilung auf allen Feststoffteilen anfriert.

Die Trommel ist im Gegensatz zu herkömmlichen Trommeln verhältnismäßig kurz ausgebildet, so daß das von der Einlaßseite her eingespritzte Kühlmittel sehr rasch mit dem gesamten Füllgut in Berührung kommen kann. So kann beispielsweise der zylindrische Mittelteil der Trommel bei einem Durchmesser von 1000 mm eine Länge von nur 600 mm aufweisen. Die geringe Baulänge der Trommel, intensive Absaugung und dementsprechend rasche Kühlmittelzufuhr bieten die Möglichkeit, die Behandlung und Gefrierzeit relativ genau zu steuern und somit ein genau definierbares Temperatur-Zeit-Profil einzuhalten.

Es wurde bereits darauf hingewiesen, daß beispielsweise eine zu lange Gofrierzeit dazu führen kann, daß die einzelnen Produktteile verkleben, verklumpen oder auch brechen. Im übrigen ist ein schockartiger Gefriervorgang für das Anhaften der Soße an den einzelnen Produktteilen vorteilhaft. Dies setzt allerdings eine sehr rasche Einleitung der Soße voraus. Die Einleitung der Soße kann unbehindert erfolgen, während sie bei herkömmlichen Vorrichtungen, bei denen nur eine Öffnung vorgesehen ist und somit eine Auswerferschaufel im Bereich dieser einen Öffnung notwendig ist, gelegentlich durch die Auswerferschaufel behindert werden kann.

Die erfindungsgemäße Vorrichtung bietet den Vorteil, daß in einer einzigen Anlage lose rollend gefrorene Lebensmittel hergestellt werden können, die mit einer beliebig einstellbaren Menge an Soße, Marinade, Öl- und/oder Gewürzemulsionen und ähnlichen Stoffen so überzogen (Coating) werden können, daß im Ergebnis die einzelnen Teilstücke des jeweiligen Lebensmittels nach wie vor nicht zusammenhaften, daß an jedem Teilstück ein weitgehend gleicher Anteil des Überzugs anhaftet und daß die einzelnen Teile nicht beschädigt werden. Das Frieren und Coaten kann zeitlich unabhängig voneinander, also zum Beispiel gleichzeitig oder in beliebiger Reihenfolge abwechselnd stattfinden.

Vor eine der beiden Öffnungen der Trommel kann eine zusammenhängende Anordnung aus einem Absaugrohr, einer Düse zum Einbringen eines Kühlmittels, also insbesondere flüssigen Stickstoffs oder Kohlendioxids, und einer Düse oder Lanze zum Einbringen von Soße geschwenkt oder gefahren werden. Die Eintrittsfläche des Absaugrohres nimmt im wesentlichen die gesamte Querschnittsfläche der entsprechenden Öffnung der Trommel ein, so daß Kühlmittel, das in den gasförmigen Zustand übergegangen ist, rasch abgesaugt werden kann. In der Zuleitung für Soße kann sich eine Soßenpumpe befinden, die mit einem Soßenvorratsbehälter oder auch einem Soßenmischer oder -kocher verbunden ist. Die Düsen und/oder Lanzen zum Einbringen des Kühlmittels und der Soße sind leicht auswechselbar und können daher zu Reinigungszwecken oder bei der Umstellung auf ein anderes Arbeitsprogramm ohne weiteres ausgewechselt werden.

## Patentansprüche

1. Vorrichtung zum Überziehen von Lebensmittelprodukten mit Soße unter gleichzeitigem Tiefgefrieren, mit einer liegend angeordneten, drehbaren Trommel (10), auf deren innerer Wandfläche ein Mitnehmer angeordnet ist und die an einer Stirnseite eine Öffnung (16) aufweist, **gekennzeichnet** durch eine zweite Öffnung (18) auf der gegenüberliegenden Stirnseite, einen an dem Mitnehmer (88) angebrachten Auswerfer vor der zweiten Öffnung (18), eine in der ersten Öffnung (16) angebrachte Düse (80,84,86) zum Einbringen eines Kühlmittels, insbesondere in der Form von flüssigem Stickstoff oder flüssigem CO₂ in die Trommel, eine weitere, in der ersten Öffnung (16) angebrachte Düse zum Einspritzen von Soße in die Trommel, ein im wesentlichen die gesamte Querschnittsfläche der ersten Öffnung (16) einnehmendes Absaugrohr zum Absaugen von gasförmigem Kühlmittel sowie eine bewegliche Halterung (42,44), die das Absaugrohr (34,28) aufnimmt und es gestattet, das Absaugrohr zwischen einer Position unmittelbar vor der ersten Öffnung und einer zurückgezogenen Position zu bewegen.

2. Vorrichtung nach Anspruch 1, dadurch **gekennzeichnet**, daß das Absaugrohr im Bereich der ersten Öffnung (16) einen von dem übrigen Absaugrohr trennbaren Abschnitt (34) aufweist, der mit der Öffnung (36) der ersten Öffnung verbunden ist.

3. Vorrichtung nach Anspruch 1, dadurch **gekennzeichnet**, daß die Halterung für das Absaugrohr einen Pfosten (90) mit Schwenkarm (92) aufweist, die gestatten, das Absaugrohr in bezug auf die Öffnung (16) hin- und herzuschwenken.

4. Vorrichtung nach Anspruch 1, 2 oder 3, dadurch **gekennzeichnet**, daß in dem Absaugrohr (34,28,60) Gebläse (30,62,64) angeordnet sind.

5. Vorrichtung nach Anspruch 3 oder 4, dadurch **gekennzeichnet**, daß der untere Abschnitt (34) des Absaugrohres durch einen Rohrbogen (34) gebildet ist, dessen waagerechter Schenkel mit der ersten Öffnung (16) der Trommel (10) verbindbar ist und dessen senkrecht nach oben aufragender Schenkel mit Hilfe einer Schiebemuffe (38) mit dem weiteren, senkrecht aufsteigenden Teil (28,60) des Absaugrohres verbindbar ist.

6. Vorrichtung nach einem der vorhergehenden Ansprüche, dadurch **gekennzeichnet,** daß die Düse (80,84,86) zum Einbringen des Kühlmittels mit dem Absaugrohr verbunden und mit diesem zwischen einer Position innerhalb der ersten Öffnung (16) und einer zurückgezogenen Position beweglich ist.

7. Vorrichtung nach einem der vorhergehenden Ansprüche, dadurch **gekennzeichnet**, daß das der ersten Öffnung (16) zugewandte Ende des Absaugrohres (34,28) von einem Kragen (36) umgeben ist, durch den eine Leitung (100) zum Einbringen von Soße hindurchgeht, die in einer in das Innere der Trommel eintretenden Düse (106,108,110) endet.
